# EUROPÄISCHE PATENTSCHRIFT

(11) **EP 0 523 504 B1**
(45) Veröffentlichungstag und Bekanntmachung des Hinweises auf die Patenterteilung: **10.05.1995**
(21) Anmeldenummer: 92111442.7
(22) Anmeldetag: 06.07.1992
(51) Int. Cl.: B62J 39/00, B62J 23/00

(54) **Transportschutzeinrichtung für Fahrräder**
Transport protecting device for bicycles
Dispositif de protection de bicyclette en transport

(30) Priorität: 19.07.1991 DE 4124047
(43) Veröffentlichungstag der Anmeldung: 20.01.1993
(73) Patentinhaber: DEUTER SPORT UND LEDER GMBH, D-86156 Augsburg (DE)
(72) Erfinder: Heckmair, Andreas, W-8980 Oberstdorf (DE)
(74) Vertreter: von Puttkamer, Nikolaus, Dipl.-Ing. Patentanwälte Haft, von Puttkamer Berngruber, Czybulka

(56) Entgegenhaltungen:
- US-A- 2 803 349
- US-A- 4 892 190
- US-A- 4 991 715

## Beschreibung

Die Erfindung betrifft eine Transportschutzeinrichtung für Fahrräder nach dem Oberbegriff des Patentanspruches 1.

Mehr und mehr werden Fahrräder, insbesondere Mountain-Bikes und dergleichen, auf Flug-, Auto- und Bahnreisen mitgenommen, so daß die geplanten Touren mit den eigenen Rädern am Zielort durchgeführt werden können. Ein Problem besteht dabei jedoch darin, daß die Fahrräder beim Verpacken zur Aufbewahrung im Gepäckraum der genannten Transportmittel leicht beschädigt werden und dann am Zielort nicht zur Verfügung stehen. Dies gilt insbesondere für die Bahn und das Flugzeug, weil die Fahrräder in diesen Fällen von fremden, meist sorglos mit ihnen umgehenden Personen verpackt werden. Die genannten Beschädigungen treten auch bei der Aufbewahrung der Fahrräder in sogenannten Bikesäcken auf, da diese Bikesäcke überlichweise aus flexiblen Kunststoffmaterialen bestehen, die Stöße nicht auffangen können.

Aus der Druckschrift US-A-4 991 715 geht eine Transportschutzeinrichtung für Fahrräder hervor, die einen Schutzrahmen für das Schaltwerk der Gangschaltung des Fahrrades und eine Befestigungseinrichtung für die Vorderradgabel sowie eine Befestigungseinrichtung für die Hinterradgabel des Fahrrades aufweist. Eine Anpassbarkeit an Fahrräder unterschiedlicher Längen ist möglich.

Die Aufgabe der vorliegenden Erfindung besteht darin, eine Transportschutzeinrichtung für Fahrräder anzugeben, mit deren Hilfe der Fahrräder, beispielsweise im Flugzeug, in der Bahn oder im Auto bzw. transportiert werden können, wobei ein Verdrehen des Lenkers in Bezug auf die Vorderradgabel nicht erforderlich und eine Anpassung an unterschiedliche Fahrradlängen möglich ist.

Diese Aufgabe wird durch eine Transportschutzeinrichtung der eingangs genannten Art gelöst, die durch die in dem kennzeichnenden Teil des Patentanspruches 1 angegebenen Merkmale gekennzeichnet ist.

Der wesentliche Vorteil der Erfindung besteht darin, daß eine aufwendige und unerwünschte Verdrehung der Vorderradgabel in Bezug auf den daran befestigten Lenker nicht nötig ist, weil der Lenker bei der Befestigung der Vorderradgabel automatisch in die Ebene des Fahrrades gelangt. Das Schutzgehäuse ist über einen in Richtung zur Vordergabel ragenden Stab mit einer Befestigungseinrichtung für die Vorderradgabel verbunden, so daß neben dem Schutz des Schaltwerkes durch das Schutzgehäuse auch die Vorderradgabel und die Hinterradgabel starr miteinander verbunden sind.

Das vorgesehene Schutzgehäuse umgibt im Montagezustand das Schaltwerk der Gangschaltung schützend, so daß in diesem Bereich Schädigungen durch einwirkende Stöße bei einer unsanften Behandlung der Fahrräder insbesondere beim Verstauen derselben in Packräumen vermieden werden.

Vorteilhafterweise ist die erfindungsgemäße Transportschutzeinrichtung äußerst einfach und schnell an den Gabeln eines zu schützenden Fahrrades befestigbar.

Vorteilhafterweise ist die vorliegende Schutzeinrichtung äußerst einfach aufgebaut und preiswert aus Kunststoff oder Metallteilen herstellbar.

Weitere vorteilhafte Ausgestaltungen der Erfindung gehen aus Unteransprüchen hervor.

Im folgenden werden die Erfindung und deren Ausgestaltungen im Zusammenhang mit den Figuren näher erläutert. Es zeigen:
- Fig. 1: eine Seitenansicht der vorliegenden Schutzeinrichtung;
- Fig. 2: eine Ansicht der die Hinterradgabel haltenden Befestigungseinrichtung;
- Fig. 3: einen teleskopierbaren Stab und
- Fig. 4: eine schematische Darstellung zur Erläuterung der Anbringung der vorliegenden Transportschutzeinrichtung an einem Fahrrad.

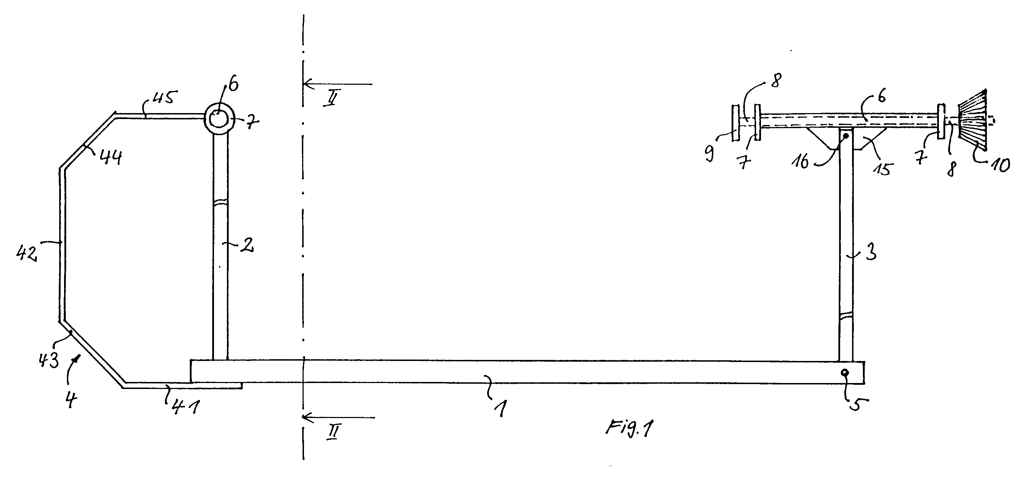

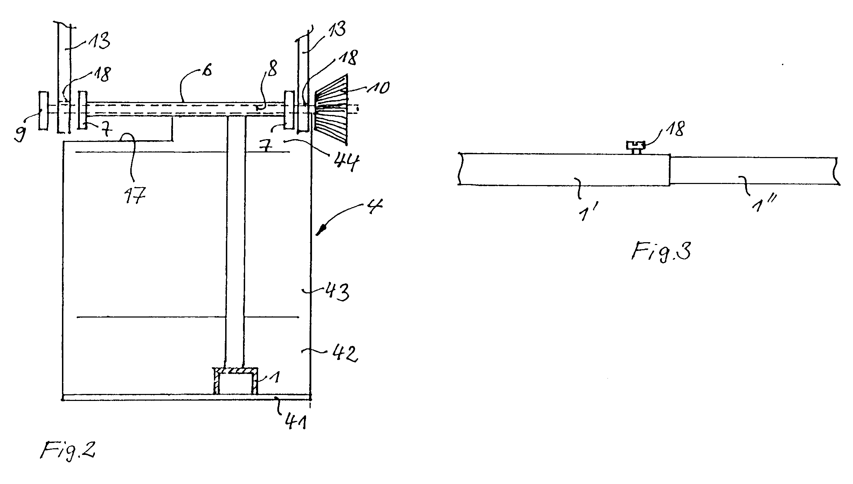

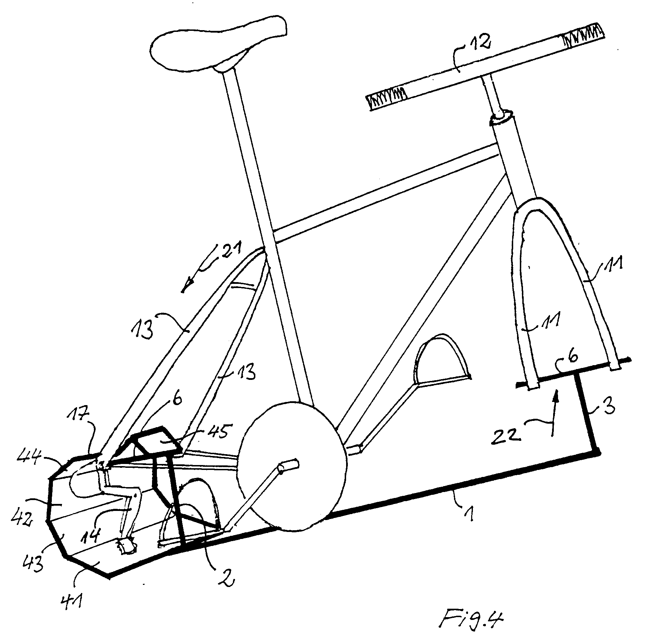

In der Figur 1 ist ein Schutzgehäuse für das Schaltwerk der Gangschaltung eines Fahrrades mit 4 bezeichnet. Im wesentlichen besteht dieses Schutzgehäuse aus das Schaltwerk 14 (Fig. 4) an seiner unteren Seite, an seiner rückwärtigen Seite und zweckmäßigerweise an seiner oberen Seite umgebenden Wänden 41 bis 45. Das Gehäuse 4 ist so gestaltet, daß seine Wände 41 bis 45 in der Querrichtung so weit über das Schaltwerk 14 hinausragen, daß eine Beschädigung desselben durch Stöße von der Seite, beispielsweise beim Aufeinanderlegen von Fahrrädern, vermieden wird. Es ist auch denkbar an der Seite spezielle Seitenwände (nicht dargestellt) vorzusehen. Das Gehäuse 4 kann dabei, wie dargestellt, eckig oder auch bogenförmig, insbesondere um die hintere und untere Seite des Schaltwerkes 14 herumverlaufen.

Das Schutzgehäuse 4 ist mit einer Befestigungseinrichtung verbunden, mit deren Hilfe es an der Hinterradgabel 13 befestigbar, insbesondere festklemmbar ist. Diese Befestigungseinrichtung für die Hinterradgabel wird im folgenden insbesondere im Zusammenhang mit der Figur 2 näher erläutert. Sie besteht im wesentlichen aus einem mit dem Schutzgehäuse 4, vorzugsweise der oberen Wand 45 verbundenen Rohr 6, das in Querrichtung verläuft und an jedem seiner Enden einen Flansch 7 aufweist. Durch das Rohr 6 ist eine Stange 8 geführt, die in dem Rohr 6 verschiebbar gehalten ist und an den Enden des Rohres 6 über die Flansche 7 nach außen ragt. Das eine Ende der Stange 8 ist fest mit einem Flansch 9 verbunden, während das andere Ende der Stange 8 einen Gewindebereich mit einem aufgeschraubten Befestigungsflansch aufweist, der vorzugsweise die Form eines drehbaren Teiles 10 aufweist. Wenn das Teil 10 auf den Gewindebereich der Stange 8 gedreht und die Stange 8 so gehalten wird, daß sie der Drehung nicht folgen kann, hat dies zur Folge, daß die Flansche 7 und 9 (linke Seite der Figur 3) und der Flansch 7 und das Teil 10 (rechte Seite der Figur 3) aufeinanderzugezogen werden, so daß zwischen ihnen die gegenüberliegenden Endbereiche der Hinterradgabel 13 eingeklemmt werden, was dazu führt, daß das mit dem Rohr 6 verbundene Schutzgehäuse 4 am Fahrrad befestigt wird. Zur Erhöhung der Stabilität ist mit dem Rohr 6 vorzugsweise mittig eine Strebe 2 verbunden, deren unteres Ende an der unteren Wand 41 des Gehäuses 4 befestigt ist. Die Stange 8 ist zweckmäßigerweise so gestaltet, daß sie in die Nuten 18 der unteren Enden der Teile der Hinterradgabel 13 eingeführt werden kann.

Das beschriebene Schutzgehäuse 4 kann nach Entfernen des Hinterrades und nach Einsetzen der Stange 8 in die Nuten 18 durch Drehen des Teiles 10 in einer einfachen Weise an der Hinterradgabel 13 derart festgeklemmt werden, daß das Schutzgehäuse 4 das nach der Entfernung des Hinterrades am Fahrrad verbliebene Schaltwerk 14 der Gangschaltung schützend umgibt. Mit dem Schutzgehäuse 4, insbesondere mit dem unteren Ende der Strebe 2 ist ein Stab 1 verbunden, der sich vom Schutzgehäuse 4 ausgehend im Montagezustand in Richtung auf die Vorderradgabel 11 erstreckt. Am vorderen Ende des Stabes 1 ist eine sich nach oben erstreckende Strebe 3 befestigt, die an ihrem oberen Ende ähnlich wie die Strebe 2 mit einer Befestigungseinrichtung zur Befestigung der Strebe 3 an der Vorderradgabel 11 versehen ist. Da diese Befestigungseinrichtung für die Vorderradgabel 11 vorzugsweise ebenso aufgebaut ist und funktioniert wie die im Zusammenhang mit der Figur 3 bereits beschriebene Befestigungseinrichtung für die Hinterradgabel 13 ist eine weitere Erläuterung nicht erforderlich. Einzelheiten dieser Befestigungseinrichtung, die bereits im Zusammenhang mit der Figur 3 dargestellt und beschrieben wurden, sind in der entsprechenden Weise bezeichnet. Es wird aber darauf hingewiesen, daß die Achse der Stange 8 und des Rohres 6 dieser Befestigungseinrichtung für die Vorderradgabel 11 in Bezug auf die Stange 8 und das Rohr 6 der Befestigungseinrichtung für die Hinterradgabel 13 um 90° verdreht sind. Dadurch wird erreicht, daß bei der Befestigung der Vorderradgabel 11 der Lenker 12 des Fahrrades automatisch in die Ebene desselben gelangt. Ein lästiges Drehen des Lenkers 12 in Bezug auf die Vorderradgabel 11 ist daher nicht erforderlich.

Auch die Vorderradgabel 11 wird vorzugsweise, ebenso wie die Hinterradgabel 13, durch Einschieben der Stange 8 in die Nuten ihrer Endbereiche befestigt.

Das Rohr 6 der Befestigungseinrichtung für die Vorderradgabel 11 ist mit einer Halteplatte 15 verbunden, die um eine Querachse 16 in Bezug auf die Strebe 3 zusammen mit dem Rohr 6 in der Ebene des Fahrrades verschwenkebar ist.

Vorzugsweise ist das untere Ende der Strebe 3 am Stab 1 um eine Querachse 5 verschwenkbar befestigt. Dadurch kann eine Anpassung an unterschiedliche Fahrradlängen durch Verschwenken der Strebe 3 in der Vertikalebene erreicht werden.

Um eine Anpassung an verschiedene Fahrradlängen zu erreichen, kann der Stab 1 auch dadurch teleskopierbar gestaltet sein, daß er aus wenigstens einem Innenrohr 1'' und einem Außenrohr 1' gebildet ist, die gegeneinander zur Veränderung der Länge des Stabes 1 und des Abstandes zwischen den Streben 2 und 3 verschiebbar sind. Eine im Außenrohr 1' verstellbare Schraube 18 kann vorgesehen sein, um die Rohre 1' und 1'' aneinander in einer gewünschten Lage zu befestigen. Um ein Verdrehen der Rohre 1' und 1'' gegeneinander zu verhindern, weisen diese Rohe 1' und 1'' vorzugsweise ein verdrehsicheres, insbesondere ein ovales, drei- oder mehreckiges Profil auf.

Im Zusammenhang mit der Figur 4 wird nun die Art der Befestigung der vorliegenden Transportschutzeinrichtung an einem Fahrrad erläutert. Zunächst werden das Vorderrad und das Hinterrad vom Fahrrad entfernt. Danach wird die Hinterradgabel 13 in der Richtung des Pfeiles 21 so an die Transportschutzeinrichtung angenähert, daß das Schaltwerk 14 in den vom Schutzgehäuse 4 umschlossenen Raum gelangt und daß die Befestigungseinrichtung für die Hinterradgabel an der Hinterradgabel 13 zur Anlage gelangt (Einsetzen des Stabes 8 in die Nuten 18).

Um das Einführen des Schaltwerkes 14 in das Schutzgehäuse 4 zu erleichtern, kann dieses an seiner oberen Seite eine Aussparung 17 aufweisen, durch die das Schaltwerk 14 beim Annähern der Befestigungseinrichtung für die Hinterradgabel 13 an dieselbe hindurchtreten kann.

Die Strebe 3 wird in Bezug auf den Stab 1 in der Richtung des Pfeiles 22 derart verschwenkt bzw. verschoben, daß die genannte Befestigungseinrichtung an der Vorderradgabel 11 zur Anlage gelangt. Die Befestigungseinrichtungen für die Vorderradgabel 11 und für die Hinterradgabel 13 werden dann durch Drehen der jeweiligen Teile 10 an der Hinterradgabel 13 bzw. an der Vorderradgabel 11 befestigt.

## Patentansprüche

1. Transportschutzeinrichtung für Fahrräder bei ausgebauten Rädern, mit einem Schutzgehäuse (4), das das Schaltwerk (14) der Gangschaltung des Fahrrades wenigstens teilweise umgibt, und mit einer Befestigungseinrichtung für die Hinterradgabel (13) und einer Befestigungseinrichtung für die Vorderradgabel (11), dadurch gekennzeichnet, daß mit dem Schutzgehäuse (4) ein Stab (1) verbunden ist, der sich in Richtung auf die Vorderradgabel (11) erstreckt, daß mit dem freien Endbereich des Stabes (1) über eine Strebe (3) die Befestigungseinrichtung für die Vorderradgabel (11) verbunden ist, daß die Befestigungseinrichtung für die Vorderradgabel (11) so gestaltet ist, daß der mit ihr verbundene Lenker (12) des Fahrrades in der Ebene des Fahrrades an einem Rohr (6) der Befestigungseinrichtung für die Vorderradgabel (11) gehalten wird und daß das Rohr (6) der Befestigungseinrichtung für die Vorderradgabel (11) an einer Halteplatte (15) befestigt ist, die in der Fahrradebene um eine in Querrichtung zu derselben verlaufende Achse (16) in Bezug auf die Strebe (3) verschwenkbar ist.

2. Einrichtung nach Anspruch 1, dadurch gekennzeichnet, daß das Schutzgehäuse (4) mit der Hilfe der Befestigungseinrichtung für die Hinterradgabel (6 bis 10) an der Hinterradgabel (13) des Fahrrades befestigbar ist.

3. Einrichtung nach Anspruch 1 oder 2, dadurch gekennzeichnet, daß das Schutzgehäuse das Schaltwerk (14) wenigstens an seiner Unterseite und an seiner Rückseite umgebende Wände (41 bis 44) aufweist, die in Querrichtung zur Fahrradebene sich seitlich über das Schaltwerk (14) hinaus erstrecken.

4. Einrichtung nach Anspruch 3, dadurch gekennzeichnet, daß die Seitenwände (41 bis 44) das Schaltwerk bogenförmig oder eckig umgeben.

5. Einrichtung nach einem der Ansprüche 2 bis 4, dadurch gekennzeichnet, daß die Befestigungseinrichtung für die Hinterradgabel (13) ein am Schutzgehäuse (4) befestigtes Rohr (6) aufweist, an dessen Enden Flansche (7) befestigt sind, daß durch dieses Rohr (6) eine Stange (8) derart verläuft, daß sie seitlich über die Flansche (7) des Rohres (6) hinausragt, daß an dem über den einen Flansch (7) des Rohres (6) hinausragenden Ende der Stange (8) ein weiterer Flansch (9) befestigt ist, daß an dem über den anderen Flansch (7) des Rohres (6) hinausragenden Ende der Stange (8) auf einem Gewindebereich drehbar ein Teil (10) angeordnet ist, und daß bei einer Drehung des Teiles (10) in Bezug auf die Stange (8) der eine Flansch (7) des Rohres (6) und der weitere Flansch (9) der Stange (8) und der andere Flansch (7) des Rohres (6) und das Teil (10) jeweils derart aufeinanderzubewegt werden, daß zwischen ihnen die Schenkelteile der Hinterradgabel (13) festklemmbar sind.

6. Einrichtung nach Anspruch 5, dadurch gekennzeichnet, daß die Stange (8) so bemessen ist, daß sie in die an den Endbereichen der Schenkelteile der Hinterradgabel (13) vorgesehene Nuten (18) einsetzbar ist.

7. Einrichtung nach einem der Ansprüche 1 bis 6, dadurch gekennzeichnet, daß eine obere Wand des Schutzgehäuses (4) eine Aussparung (17) aufweist, durch die das Schaltwerk (14) bei der Annäherung der Hinterradgabel (13) an das Schutzgehäuse (4) in dieses einführbar ist.

8. Einrichtung nach einem der Ansprüche 1 bis 7, dadurch gekennzeichnet, daß eine die obere Seite des Schutzgehäuses (4) mit der unteren Seite desselben verbindende Strebe (2) vorgesehen ist.

9. Einrichtung nach einem der Ansprüche 1 bis 8, dadurch gekennzeichnet, daß die Befestigungseinrichtung für die Vorderradgabel (11) das sich in der Fahrradebene erstreckende Rohr (6) aufweist, durch das eine Stange (8) derart verläuft, daß ihre Endbereiche über mit den Enden des Rohres (6) verbundene Flansche (7) hinausragen, daß an dem einen Ende der Stange (8) ein weiterer Flansch (9) befestigt ist, daß an dem anderen Ende der Stange (8) auf einem Gewindebereich derselben ein Teil (10) drehbar angeordnet ist, und daß bei einer Drehung des Teiles (10) in Bezug auf die Stange (8) auf der einen Seite der eine Flansch (7) und der weitere Flansch (9) und auf der anderen Seite der andere Flansch (7) und das Teil (10) so aufeinanderzubewegt werden, daß zwischen ihnen die Schenkelteile der Vorderradgabel (11') festklemmbar sind.

10. Einrichtung nach Anspruch 9, dadurch gekennzeichnet, daß die Stange (8) der Befestigungseinrichtung für die Vorderradgabel (13) so bemessen ist, daß sie in Nuten der Endbereiche der Schenkelteile der Vorderradgabel (11) einführbar ist.

11. Einrichtung nach einem der Ansprüche 1 bis 10, dadurch gekennzeichnet, daß die die Befestigungseinrichtung für die Vorderradgabel mit dem Stab (1) verbindende Strebe (3) in Bezug auf den Stab (1) um eine in Querrichtung zur Fahrradebene verlaufende Achse (5) verschwenkbar ist.

12. Einrichtung nach einem der Ansprüche 1 bis 11, dadurch gekennzeichnet, daß der Stab (1) aus einem Außenrohr (1') und wenigstens einem Innenrohr (1'') besteht, die in der Längsrichtung gegeneinander verschiebbar sind, und daß eine Vorrichtung (18) zur Befestigung des Außenstabes (1') und des Innenstabes (1'') in einer gewünschten Lage aneinander vorgesehen ist.

13. Einrichtung nach Anspruch 12, dadurch gekennzeichnet, daß die Vorrichtung (18) eine in der Wandung des Außenrohres (1') verstellbare Schraube ist.

14. Einrichtung nach Anspruch 12 oder 13, dadurch gekennzeichnet, daß das Außenrohr (1') und das wenigstens eine Innenrohr (1'') ein Profil aufweisen, durch das eine Verdrehung des Außenrohres (1') in Bezug auf das Innenrohr (1'') verhindert wird.

15. Einrichtung nach Anspruch 14, dadurch gekennzeichnet, daß das Profil durch einen drei- oder mehreckigen oder ovalen Querschnitt bestimmt wird.

16. Einrichtung nach einem der Ansprüche 1 bis 15, dadurch gekennzeichnet, daß sie aus aneinander verschraubten oder verschweißten Metallteilen besteht.

17. Einrichtung nach einem der Ansprüche 1 bis 15, dadurch gekennzeichnet, daß sie aus Kunststoffteilen besteht.

## Claims

1. A protective transport apparatus for bicycles with the wheels removed, having a protective housing (4), which at least partially surrounds the derailleur (14) of the gear-change of the bicycle, and having an attachment device for the rear forks (13) and an attachment device for the front forks (11),
**characterised in that** a bar (1), which extends towards the front forks (1), is connected to the protective housing (4),
**in that** the attachment device for the front forks (11) is connected to the free end region of the bar (1) via a strut (3),
**in that** the attachment device for the front forks (11) is designed so that the handlebars (12) of the bicycle connected thereto is retained in the plane of the bicycle at a tube (6) of the attachment device for the front forks (11),
**and in that** the tube (6) of the attachment device for the front forks (11) is attached to a retention plate (15), which can be swung in relation to the strut (3) in the plane of the bicycle around an axis (16) extending in the transverse direction relative thereto.

2. An apparatus according to Claim 1,
**characterised in that** the protective housing (4) can be attached to the rear forks (13) of the bicycle by means of the attachment device for the rear forks (6 to 10).

3. An apparatus according to Claim 1 or 2,
**characterised in that** the protective housing comprises walls (41 to 44) surrounding the derailleur (14) at least at its under side and at its rear side, which extend laterally beyond the derailleur (14) in the transverse direction to the plane of the bicycle.

4. An apparatus according to Claim 3,
**characterised in that** the side walls (41 to 44) surround the derailleur in a curve or angularly.

5. An apparatus according to one of Claims 2 to 4,
**characterised in that** the attachment device for the rear forks (13) comprises a tube (6) attached to the protective housing (4), at the end of which flanges (7) are attached,
**in that** a rod (8) passes through this tube (6) so that it protrudes laterally beyond the flanges (7) of the tube (6),
**in that** a further flange (9) is attached to the end of the rod (8) protruding beyond the one flange (7) of the tube (6),
**in that** a part (10) is disposed rotatably on a threaded region at the end of the rod (8) protruding beyond the other flange (7) of the tube (6),
**and in that** with a rotation of the part (10) in relation to the rod (8) the one flange (7) of the tube (6) and the further flange (9) of the rod (8) and the other flange (7) of the tube (6) and the part (10) are moved towards one another so that the arm parts of the rear forks (13) can be clamped therebetween.

6. An apparatus according to Claim 5,
**characterised in that** the dimensions of the rod (8) are such that it can be inserted into the grooves (18) provided at the end regions of the arm parts of the rear forks (13).

7. An apparatus according to one of Claims 1 to 6,
**characterised in that** an upper wall of the protective housing (4) comprises a recess (17) through which the derailleur (14) can be introduced when the rear forks (13) are brought closer to the protective housing (4).

8. An apparatus according to one of Claims 1 to 7,
**characterised in that** a strut (2) connecting the upper side of the protective housing (4) to the lower side thereof is provided.

9. An apparatus according to one of Claims 1 to 8,
**characterised in that** the attachment device for the front forks (11) comprises the tube (6) extending in the bicycle plane, through which a rod (8) passes so that its end regions protrude beyond flanges (7) connected to the ends of the tube (6),
**in that** a further flange (9) is attached to the one end of the rod (8),
**in that** at the other end of the rod (8) a part (10) is rotatably disposed on a threaded region thereof,
**and in that** with a rotation of the part (10) in relation to the rod (8) on the one side the one flange (7) and the further flange (9) and on the other side the other flange (7) and the part (10) are moved towards one another so that the arm parts of the front forks (11') can be clamped therebetween.

10. An apparatus according to Claim 9,
**characterised in that** the rod (8) of the attachment device for the front forks (13) has such dimensions that it can be introduced into grooves in the end regions of the arm parts of the front forks (11).

11. An apparatus according to one of Claims 1 to 10,
**characterised in that** the strut (3) connecting the attachment device for the front forks with the bar (1) can be swivelled in relation to the bar (1) around an axis (5) extending in the transverse direction to the bicycle plane.

12. An apparatus according to one of Claims 1 to 11,
**characterised in that** the bar (1) consists of an outer tube (1') and at least one inner tube (1''), which can be displaced relative to one another in the longitudinal direction,
**and in that** a device (18) is provided for attaching the outer bar (1') and the inner bar (1'') to one another in a desired position.

13. An apparatus according to Claim 12,
**characterised in that** the device (18) is a screw adjustable in the wall of the outer tube (1').

14. An apparatus according to Claim 12 or 13,
**characterised in that** the outer tube (10) and the at least one inner tube (1'') have a profile by which a twisting of the outer tube (1') relative to the inner tube (1'') is prevented.

15. An apparatus according to Claim 14,
**characterised in that** the profile is determined by a triangular or polygonal or oval cross section.

16. An apparatus according to one of Claims 1 to 15,
**characterised in that** it is made from metal parts screwed or welded together.

17. An apparatus according to one of Claims 1 to 15,
**characterised in that** it is made from plastic parts.

## Revendications

1. Dispositif de protection pour le transport de bicyclettes sans leurs roues, comportant un carter de protection (4) qui entoure au moins partiellement le mécanisme (14) de changement de vitesse de la bicyclette, un dispositif de fixation pour la fourche arrière (13) et un dispositif de fixation pour la fourche avant (11), caractérisé par le fait qu'une barre (1) est reliée au carter de protection (4) et s'étend en direction de la fourche avant (11), par le fait que le dispositif de fixation pour la fourche avant (11) est lié à la région d'extrémité libre de la barre (1) par l'intermédiaire d'un montant (3), par le fait que le dispositif de fixation pour la fourche avant (11) est agencé de manière telle que le guidon (12) de la bicyclette solidaire de la fourche est tenu sur un tube (6) dudit dispositif de fixation dans le plan de la bicyclette et par le fait que le tube (6) du dispositif de fixation pour la fourche avant (11) est fixé sur une plaque de support (15) qui peut pivoter par rapport au montant (3) dans le plan de la bicyclette autour d'un axe (16) qui s'étend transversalement audit plan de la bicyclette.

2. Dispositif selon la revendication 1, caractérisé par le fait que le carter de protection (4) est fixé sur la fourche arrière (13) au moyen du dispositif de fixation pour la fourche arrière (6 à 10).

3. Dispositif selon la revendication 1 ou la revendication 2, caractérisé par le fait que le carter de protection comporte des parois (41 à 44) qui entourent le mécanisme (14) de changement de vitesse au moins vers le bas et vers l'arrière et s'étendent dans la direction transversale au plan de la bicyclette, latéralement au-delà du mécanisme (14) de changement de vitesse.

4. Dispositif selon la revendication 3, caractérisé par le fait que les parois latérales (41 à 44) entourent le mécanisme de changement de vitesse avec une forme arquée ou anguleuse.

5. Dispositif selon l'une des revendications 2 à 4, caractérisé par le fait que le dispositif de fixation pour la fourche arrière (13) comprend un tube (6) qui est fixé sur le carter de protection (4) et aux extrémités duquel sont fixées des joues (7), par le fait qu'une tige (8) traverse ledit tube (6) de telle sorte que ladite tige dépasse latéralement par rapport aux joues (7) du tube (6), par le fait qu'une joue (9) supplémentaire est fixée sur l'extrémité de la tige (8) qui fait saillie au-delà de l'une des joues (7) du tube (6), par le fait qu'une pièce (10) qui tourne sur une partie filetée est disposée à l'extrémité de la tige (8) qui dépasse par rapport à l'autre joue (7) du tube (6) et par le fait que lors d'une rotation de la pièce (10) par rapport à la tige (8), l'une des joues (7) du tube (6), la joue (9) de la tige (8), l'autre joue (7) du tube (6) et la pièce (10) se déplacent en direction l'une de l'autre de manière à serrer entre elles les pattes de la fourche arrière (13).

6. Dispositif selon la revendication 5, caractérisé par le fait que la tige (8) a des dimensions telles que celle-ci puisse s'engager dans les rainures (18) prévues dans les parties terminales des pattes de la fourche arrière (13).

7. Dispositif selon l'une des revendications 1 à 6, caractérisé par le fait qu'une paroi supérieure du carter de protection (4) comporte une découpe (17) dans laquelle pénètre le mécanisme de changement de vitesse lorsqu'on approche la fourche de roue arrière (13) du carter de protection (4).

8. Dispositif selon l'une des revendications 1 à 7, caractérisé par le fait qu'il est prévu un montant (2) qui relie la parie supérieure du carter de protection (4) à la partie inférieure dudit carter de protection.

9. Dispositif selon l'une des revendications 1 à 8, caractérisé par le fait que le dispositif de fixation pour la fourche avant (11) comprend un tube (6) qui s'étend dans le plan de la bicyclette et aux extrémités duquel sont fixées des joues, par le fait que ledit tube est traversé par une tige (8) de telle sorte que ladite tige dépasse latéralement par rapport aux joues (7) fixées au tube (6), par le fait qu'une joue (9) supplémentaire est fixée sur l'extrémité de la tige (8) qui dépasse au-delà de l'une des joues (7) du tube (6), par le fait qu'une pièce (10) qui tourne sur une partie filetée de la tige est disposée à l'autre extrémité de ladite tige (8) et par le fait que lors d'une rotation de la pièce (10) par rapport à la tige (8), l'une des joues (7) du tube (6), la joue (9) supplémentaire, la joue (7) située de l'autre côté et la pièce (10) se déplacent en direction l'une de l'autre de manière à serrer entre elles les pattes de la fourche arrière (13).

10. Dispositif selon la revendication 9, caractérisé par le fait que la tige (8) du dispositif de fixation pour la fourche avant (11) a des dimensions telles que celle-ci puisse s'engager dans les rainures prévues dans les parties terminales des pattes de la fourche avant (11).

11. Dispositif selon l'une des revendications 1 à 10, caractérisé par le fait que le montant (3) qui relie le dispositif de fixation pour la fourche avant à la barre (1) peut pivoter par rapport à ladite barre (1) autour d'un axe (5) qui s'étend transversalement au plan de la bicyclette.

12. Dispositif selon l'une des revendications 1 à 11, caractérisé par le fait que la barre (1) se compose d'un tube extérieur (1') et d'au moins un tube intérieur (1'') qui peuvent coulisser l'un par rapport à l'autre dans la direction longitudinale et par le fait qu'il est prévu un dispositif (18) pour fixer l'un sur l'autre dans la position souhaitée le tube extérieur (1') et le tube intérieur (1'').

13. Dispositif selon la revendication 12, caractérisé par le fait que le dispositif (18) est une vis réglable montée dans la paroi du tube extérieur (1').

14. Dispositif selon la revendication 12 ou la revendication 13, caractérisé par le fait que le tube extérieur (1') et le tube intérieur (1'') au nombre d'au moins un ont un profil qui interdit une rotation du tube extérieur (1') par rapport au tube intérieur (1'').

15. Dispositif selon la revendication 14, caractérisé par le fait que le profil est défini par une section droite en forme de triangle, de polygone ou ovale.

16. Dispositif selon l'une des revendications 1 à 15, caractérisé par le fait qu'il se compose de pièces métalliques vissées ou soudées les unes avec les autres.

17. Dispositif selon l'une des revendications 1 à 15, caractérisé par le fait qu'il se compose de pièces en matériau synthétique.
